# FASCICULE DE BREVET EUROPEEN

(11) **EP 0 614 338 B1**
(45) Date de publication et mention de la délivrance du brevet: **29.05.1996**
(21) Numéro de dépôt: 93901774.5
(22) Date de dépôt: 25.11.1992
(51) Int. Cl.: A23K 1/18, A23K 1/16, A23K 1/00

(54) **PROCEDE DE TRAITEMENT DE MATIERES PROTEIQUES, PRODUITS OBTENUS ET APPLICATIONS EN ALIMENTATION ANIMALE**
VERFAHREN ZUR BEHANDLUNG VON PROTEINHALTIGEN MATERIALEN, DIE ERHALTENE PRODUKTE UND IHRE ANWENDUNGEN IN TIERFUTTERMITTEL
METHOD OF TREATMENT OF PROTEIN MATERIALS, PRODUCTS OBTAINED AND APPLICATIONS TO THE ANIMAL FOOD INDUSTRY

(30) Priorité: 25.11.1991 FR 9114507
(43) Date de publication de la demande: 14.09.1994
(73) Titulaire: INSTITUT NATIONAL DE LA RECHERCHE AGRONOMIQUE (I.N.R.A.), F-75341 Paris Cédéx 07 (FR)
(72) Inventeur: VIROBEN, Gérard, F-44000 Nantes (FR); DELORT-LAVAL, Jean, F-44000 Nantes (FR); MELCION, Jean-Pierre, F-44240 La Chapelle-sur-Erdre (FR); GIBOULOT, Bernard, F-44240 La Chapelle-sur-Erdre (FR)
(74) Mandataire: Michelet, Alain
(86) Numéro de dépôt international: FR9201099
(87) Numéro de publication internationale: WO9310673

(56) Documents cités:
- FR-A- 2 225 100
- FR-A- 2 263 703
- FR-A- 2 510 875
- JOURNAL OF ANIMAL SCIENCE vol. 37, no. 5, 1973, pages 1239 - 1243 S.P. SCHMIDT "EFFECTS OF FORMALDEHYDE, GLYOXAL, OR HEXAMETHYLENETETRAMINE TREATMENT OF SOYBEAN MEAL ON NITROGEN UTILIZATION AND GROWTH IN RATS AND IN VITRO RUMEN AMMONIA RELEASE"

## Description

La présente invention appartient au domaine du traitement des matières protéiques. Elle a plus particulièrement pour objet un procédé pour protéger les protéines alimentaires, de manière à en améliorer l'efficacité nutritionnelle.

On a déjà proposé d'améliorer la nutrition azotée des animaux, et plus particulièrement des ruminants, en traitant les protéines alimentaires de manière à les protéger de la dégradation dans le rumen, tout en conservant leur disponibilité au niveau intestinal. Un tel procédé de traitement améliore l'efficacité nutritionnelle pour le ruminant, en limitant la fermentation des protéines alimentaires dans le rumen, et en les protégeant de la désamination bactérienne. Les procédés connus impliquent le traitement des matières protéiques par des substances naturelles, telles que les tanins, ou synthétiques, notamment des aldéhydes. On peut citer à cet effet le brevet français 1 461 364 au nom de l'INSTITUT NATIONAL DE LA RECHERCHE AGRONOMIQUE, ainsi que le brevet DE-B-1 692 412, ce dernier document ayant plus particulièrement pour objet un procédé de traitement au formaldéhyde, permettant d'assurer un durcissement des particules protéiques. Cette technique aboutit à des complexes stables en milieu de rumen, mais dissociés dans la suite du tube digestif (voir ZELTER S.Z., LEROY F., TISSIER J.P, 1970 "Protection des protéines alimentaires contre la désamination bactérienne dans le rumen" ABABB 10, 111-122). Les protéines alimentaires échappent ainsi à la désamination dans la panse et sont la source directe des nutriments azotés dont l'animal a besoin. De nombreux essais ont été réalisés sur les vaches laitières ainsi que sur les moutons et les chèvres. La technique du traitement au formaldéhyde a été appliquée à grande échelle et l'on a constaté une amélioration effective du bilan azoté et de la production laitière.

Toutefois, le réactif le plus communément utilisé, à savoir le formaldéhyde, n'est pas exempt d'inconvénients. Il s'agit d'abord d'un composé chimique toxique, donnant lieu à des difficultés de manipulation, et il existe toujours le risque d'inhalation par le personnel. Par ailleurs, le formaldéhyde utilisé industriellement se présente sous forme d'une solution aqueuse (formol), à une concentration comprise entre 30 et 40 %, généralement stabilisée par 10 à 15 % de méthanol pour éviter la polymérisation. Une telle solution a tendance à facilement déposer quand la température ambiante s'abaisse en dessous d'un certain seuil, obligeant à un conditionnement du produit et à un ajustement de sa concentration avant utilisation. Enfin, et même si les matières protéiques traitées par le formaldéhyde ne présentent en elles-mêmes aucune toxicité, les éleveurs restent réticents pour les mettre en oeuvre dans l'alimentation animale, sachant que le formaldéhyde a été utilisé pour leur fabrication.

Il est donc souhaitable de mettre au point un procédé de traitement des matières protéiques avec des réactifs de protection différents du formaldéhyde, et en particulier plus facilement manipulables et ne présentant pas de risque de toxicité.

La présente invention apporte une solution à ce problème technique. Elle a pour objet un procédé de traitement de matières protéiques comprenant l'étape de réaction d'une telle matière avec de l'hexaméthylènetétramine en milieu acide provenant d'un acide inorganique fort, l'HMT étant, dans ladite réaction, transformée in situ en formaldéhyde.

L'idée qui est à la base de la présente invention est d'utiliser un réactif qui donne naissance in situ au formaldéhyde, mais qui est exempt des inconvénients de ce dernier composé. L'hexaméthylènetétramine (HMT), également dénommé hexamine, méthénamine, urotropine, cystamine, ou aminoform, est connue pour être un précurseur de formaldéhyde. Elle est déjà utilisée comme produit antibactérien en médecine vétérinaire, et a été proposée comme agent de conservation de denrées alimentaires ainsi que comme conservateur d'ensilage.

Comme document illustrant l'état de la technique, on peut citer l'article publié dans Journal of animal Science, vol. 37 N° 5, 1973, pages 1238-1245 qui décrit l'utilisation de HMT seule pour traiter des aliments destinés aux rats. Selon les auteurs, l'HMT est peu efficace comme agent protecteur, les résultats obtenus étant même parfois inférieurs à ceux enregistrés avec des aliments témoins.

Le brevet FR-A-2 225 100 décrit un procédé de conservation de fourrages et d'ensilages utilisant l'HMT avec un acide organique, de préférence l'acide propionique, dans des conditions permettant de former un produit d'addition, notamment un sel. L'HMT dans un tel procédé, fait seulement fonction de conservateur et les conditions de sa mise en oeuvre ne lui permettent pas d'agir comme précurseur de formaldéhyde.

Selon l'invention, on a défini les conditions de mise en oeuvre de l'HMT permettant d'assurer un traitement de protection efficace de la matière protéique. On a constaté, en effet, que ce réactif utilisé seul, n'a qu'une faible action sur le substrat protéique. Il convient de réaliser la réaction en milieu acide provenant d'un acide inorganique fort.

L'agent de traitement du procédé de l'invention, à savoir l'HMT, peut être mis en oeuvre en poudre ou en solution aqueuse. Généralement, le traitement s'effectue en milieu peu hydraté, par exemple à 10-15 % d'humidité. Ces indications ne sont toutefois pas limitatives, la présentation du réactif et le taux d'humidité pouvant varier selon la nature de la matière protéique mise en oeuvre et les autres paramètres de la réaction.

Les matières protéiques susceptibles d'être soumises au procédé de l'invention comprennent n'importe quelle protéine pouvant convenir à l'alimentation animale, plus particulièrement des ruminants. Il peut donc s'agir de protéines végétales ou animales. On traite en priorité des substrats protéiques végétaux, tels que des tourteaux de soja, de colza, d'arachide, de fèverole, de pois et autres matières végétales consommables par l'animal. Ces matières premières ne sont citées qu'à titre indicatif. D'autres exemples de matières protéiques sont donnés dans la littérature antérieure, et sont accessibles à l'homme du métier, voir par exemple brevet DE-B-1 692 412 précité.

Selon l'invention, la réaction de la matière protéique et de l'HMT doit être effectuée en milieu acide inorganique fort. Le pH du produit traité mesuré conventionnellement sur une suspension aqueuse à 10 % en poids se situe en général entre 2 et 6, de préférence environ entre 4,5 et 5,5. Pour obtenir ces conditions acides de traitement, on utilise un acide inorganique fort qui est ajouté au milieu réactionnel. Il convient d'utiliser un acide répondant aux exigences de la nutrition, et n'ayant pas en lui-même de toxicité. L'acide ayant donné les meilleurs résultats est l'acide chlorhydrique.

On a constaté que la présence d'eau était favorable à une bonne mise en contact des réactifs avec le substrat protéique. Toutefois, la quantité d'eau ne doit pas être excessive, pour ne pas donner lieu ultérieurement à l'obligation de l'éliminer par chauffage.

L'homme du métier comprendra aussi que les conditions de la réaction doivent être choisies pour établir une mise en contact intime du substrat protéique et des réactifs. A cet effet, il peut être nécessaire de broyer la matière protéique. Par exemple, dans le cas de tourteaux d'origine végétale, les granulométries appropriées se situent dans la fourchette de 0,1 à 2 mm, par exemple de l'ordre de 0,2 à 0,5 mm de grosseur de particules.

La quantité d'HMT à mettre en oeuvre dans la réaction dépend de la matière protéique à traiter. Elle peut être déterminée par référence à celle qui correspond à la fourniture in situ de la quantité de formaldéhyde nécessaire à la protection des protéines. En raisonnant par rapport au poids de matière sèche du substrat protéique, la quantité d'HMT, également exprimée sur sec, est comprise en général entre 0,2 et 2 %, et de préférence entre 0,3 et 1 % en poids. Rapportée à la teneur en protéines brutes, cette quantité est en général comprise entre 0,5 et 4 %, selon la matière première concernée et le traitement qu'elle a subi.

On a également constaté que la présence d'eau était utile, comme indiqué ci-dessus, l'humidité du milieu de réaction pouvant être apportée par les réactifs eux-mêmes. En effet, l'HMT se présente normalement sous la forme d'une poudre blanche pratiquement inodore, qui est très facilement manipulable. Elle est très soluble dans l'eau (plus de 600 g/l). Une façon commode de mettre en oeuvre le procédé de l'invention consiste donc à pulvériser sur le substrat protéique, ayant subi le cas échéant un broyage préalable, une solution aqueuse d'HMT et ce dans des conditions de pH acide fort.

Les conditions de pH acide étant procurées par l'addition d'un acide inorganique fort, celui-ci peut être ajouté selon des modalités variables. Le mode de réalisation qui, jusqu'à présent, a donné les meilleure résultats, consiste à incorporer simultanément les réactifs (HMT et acide) dans une solution aqueuse, qui est utilisée pour le traitement du substrat protéique. Mais il est également possible de traiter dans une première étape le substrat protéique à l'aide d'une solution aqueuse d'HMT et, après mise en contact intime, d'ajouter, par pulvérisation par exemple, une solution aqueuse d'acide inorganique fort. Inversement, on peut traiter d'abord le substrat protéique avec la solution aqueuse acide, malaxer le tout, puis ajouter la solution aqueuse du réactif HMT.

On a trouvé que la température pouvait exercer une influence sur les résultats de la réaction. Celle-ci peut être en principe conduite entre la température ambiante et la température d'ébullition (environ 100°C) du milieu réactionnel. Il convient d'éviter toute libération prématurée de formaldéhyde. Il n'est pas exclu de travailler à des températures supérieures, dans une enceinte fermée et résistant à la pression, mais il convient de ne pas dégrader les protéines et on préfère donc, en général,travailler à des températures inférieures. Par exemple, une fourchette de 50 à 70°C convient bien.

La durée de la réaction dépend naturellement de la température à laquelle elle est réalisée. On a trouvé qu'il convenait de faire subir aux produits traités une maturation, qui suit la réaction proprement dite. Ainsi, la durée de la maturation peut être supérieure à une semaine, par exemple de une à quatre semaines. L'élévation de température a pour effet de réduire la durée de maturation, ce qui est avantageux. La maturation doit être opérée en enceinte étanche, de manière que la libération du formaldéhyde s'opère in situ. On a trouvé que, grâce au procédé de l'invention, le formaldéhyde diffusait mieux dans la masse du substrat que dans les procédés de la technique antérieure. Les pertes en formaldéhyde actif sont donc réduites, ce qui permet de diminuer d'autant les quantités d'HMT à mettre en oeuvre, tout en conservant l'efficacité du traitement. Ainsi, selon un aspect surprenant du procédé de l'invention, il n'est pas nécessaire d'utiliser une quantité d'HMT correspondant à la quantité théorique de libération du formaldéhyde, soit 6 équivalents/mole d'HMT.

Par des essais de routine, l'homme du métier pourra optimiser les conditions de réaction en tenant compte de la nature particulière du substrat protéique, et en choisissant de manière correspondante la quantité de réactif à mettre en oeuvre, l'acide inorganique fort (et sa normalité), la quantité d'eau, la température et la durée de la maturation, le résultat final étant qu'après réaction et maturation, les protéines traitées (tannées) soient efficacement protégées contre la désamination bactérienne dans le rumen.

Comme indiqué ci-dessus, la quantité de réactif à mettre en oeuvre peut être choisie à une valeur inférieure à celle de la quantité théorique de libération du formaldéhyde. Par exemple, dans le cas du traitement des tourteaux de colza avec l'HMT, la solubilité des protéines évolue d'une valeur initiale d'environ 40 % de l'azote total à une insolubilisation complète de la fraction protéique, laissant subsister environ 8 % de l'azote total présent sous forme non protéique. On sait cependant qu'il n'est pas nécessaire d'atteindre un tel niveau d'insolubilisation pour obtenir l'amélioration nutritionnelle désirée. Ainsi, un traitement aboutissant à des taux de l'ordre de 11 à 12 % de solubilité de l'azote dans le produit traité est satisfaisant pour les besoins pratiques. De tels résultats peuvent être atteints en agissant sur les paramètres physiques du traitement (température, durée, quantité d'eau ajoutée) et/ou sur la quantité de réactif.

Les produits obtenus par le procédé de l'invention peuvent se présenter sous forme de poudre, de granulométrie correspondant sensiblement à celle du substrat protéique de départ. Fréquemment, pour faciliter l'alimentation des animaux, les produits sont mis sous forme de granulés ou autres formes physiques agglomérées résultant d'un passage à la presse. D'ailleurs, dans une variante de l'invention, il est possible de soumettre au pressage le produit après la réaction de l'HMT en présence d' acide inorganique fort et avant maturation. Comme le sait l'homme du métier, le pressage peut être réalisé avec ou sans présence de vapeur d'eau. Le pressage à sec est parfois plus difficile à réaliser une fois que la matière a été tannée.

L'invention sera illustrée par les exemples ci-après. Les essais ont été conduits sur des tourteaux de colza, choisis en raison de l'aptitude élevée à la fermentation de leur fraction protéique en milieu de rumen. Les tourteaux de colza utilisés contiennent 8,1 à 10,1 % en poids d'eau, soit 89,9 à 91,9 % de matière sèche. Leurs taux de protéines (N x 6,25) sont compris entre 36,9 et 43,8 % par rapport à cette matière sèche. L'azote soluble représente 38 à 42 % de l'azote total. Ce type de tourteau, riche en azote soluble, convient bien pour tester l'efficacité du procédé de l'invention. L'efficacité de ce traitement a été appréciée par la teneur en azote soluble résiduelle dans des conditions de pH voisines de celle du rumen, corrigées pour l'azote apporté par l'HMT. Ce réactif contient en effet 40 % d'azote totalement soluble dans les conditions de l'extraction. Le traitement enrichit donc légèrement le substrat en azote total (2,3 % de la teneur en azote du substrat). Il faut tenir compte de cette augmentation dans le calcul de l'azote soluble, pour apprécier de manière exacte l'effet du traitement.

### EXEMPLE 1

On pulvérise sous agitation 44,4 ml d'une solution d'HMT à 35 g/l dans l'acide chlorhydrique normal (environ 85 ml d'acide concentré sont dilués à 1 litre avec de l'eau) sur 500 g de tourteaux de colza broyés au broyeur à marteaux, muni d'une grille de 1 mm.

Le produit est conservé à la température du laboratoire en récipient étanche. Les résultats du traitement sont résumés dans le Tableau I.

**TABLEAU I**

| | Azote soluble | en % de la matière sèche | en % de l'azote total |
|---|---|---|---|
| Colza non traité | | 2,48 | 42 |
| Colza traité | maturation 1 semaine | 0,87 | 14,7 |
| | maturation 2 semaines | 0,75 | 12,7 |

### EXEMPLE 2

On pulvérise sous agitation 20 ml d'une solution aqueuse d'HMT à 77,5 g/l sur 500 g de tourteaux de colza broyés. Après mélange, on pulvérise 22,5 ml d'acide chlorhydrique 2 N (environ 170 ml d'acide concentré/litre). Après un nouveau mélange, le produit est conservé à la température du laboratoire en récipient étanche. Les résultats du traitement sont résumés dans le Tableau II.

**TABLEAU II**

| | Azote soluble | en % de la matière sèche | en % de l'azote total |
|---|---|---|---|
| Colza non traité | | 2,76 | 42,3 |
| Colza traité | maturation 1 semaine | 2,07 | 31,7 |
| | maturation 2 semaines | 1,11 | 17,0 |

### EXEMPLE 3

On pulvérise sous agitation 22,5 ml d'acide chlorhydrique 2N ou 5N (respectivement 170 ml et 425 ml d'acide concentré/litre) sur 500 g de tourteaux de colza broyés. Après mélange, on pulvérise 20 ml d'une solution aqueuse d'HMT à 77,5 g/litre. Après un nouveau mélange, le produit est conservé à la température du laboratoire en récipient étanche. Les résultats du traitement sont résumés dans le tableau III.

**TABLEAU III**

| | Azote soluble | en % de la matière sèche | en % de l'azote total |
|---|---|---|---|
| Colza non traité | | 2,76 | 42,3 |
| Colza traité | maturation 1 semaine | 1,79 | 27,5 |
| HC1 2N | maturation 4 semaines | 0,69 | 10,6 |
| Colza traité | maturation 1 semaine | 1,50 | 23,0 |
| HC1 5N | maturation 4 semaines | 0,46 | 7,0 |

On voit que l'utilisation d'acide chlorhydrique 5N conduit après 4 semaines de maturation, à un produit dont la solubilité résiduelle (environ 7 % de l'azote total) indique que la fraction protéique est entièrement protégée.

### EXEMPLE 4

On pulvérise 2,5 ml d'acide chlorhydrique 2N ou 5N sur 50 g de tourteaux de colza broyés. Après mélange, on pulvérise 2 ml d'une solution aqueuse d'HMT à 77,5 g/l. Après un nouveau mélange, le produit est étalé sur un plateau, recouvert d'une feuille d'aluminium et placé dans une étuve réglée à 70°C pendant 2 heures. Il est ensuite conservé à la température du laboratoire en récipient étanche pendant une semaine. Les résultats du traitement sont résumés dans le Tableau IV.

**TABLEAU IV**

| Azote soluble | en % de la matière sèche | en % de l'azote total |
|---|---|---|
| Colza non traité | 2,76 | 42,3 |
| Colza traité HC1 2N | 0,77 | 11,8 |
| Colza traité HC1 5N | 0,43 | 6,6 |

L'effet de l'application d'une température de 70°C pendant 2 heures est donc déterminant et permet de réduire la durée de maturation de 4 semaines à 1 semaine.

### EXEMPLE 5

On opère comme dans le premier exemple, mais en pulvérisant 88,8 ml de solution d'HMT dans l'acide chlorhydrique normal au lieu de 44,4 ml. Les résultats obtenus sont résumés dans le Tableau V.

**TABLEAU V**

| | Azote soluble | en % de la matière sèche | en % de l'azote total |
|---|---|---|---|
| Colza non traité | | 2,48 | 42,0 |
| Colza traité | maturation 1 semaine | 0,30 | 5,1 |
| | maturation 2 semaines | 0,23 | 3,9 |

Le doublement de la dose de réactif conduit à un résultat très significatif dès la première semaine de maturation. Ce traitement introduit près de 18 % d'eau par rapport à la masse du substrat, et il est donc nécessaire de sécher le produit.

### EXEMPLE 6

Des essais ont été effectués au stade pilote, d'une part en réduisant le plus possible la quantité d'eau ajoutée, d'autre part pour réaliser un passage à la presse.

Dans un réacteur à double enveloppe chauffante (température 70°C par circulation de vapeur) on introduit 15 kg de tourteaux de colza broyés au broyeur à marteaux muni d'une grille de 2 mm, puis sous agitation, 675 ml d'une solution d'HMT à 74 g/l dans l'acide chlorhydrique 4N (environ 340 ml d'acide concentré/litre). La durée du mélange est fixée à 15 minutes. Après maturation dans une étuve à 70°C pendant 2 heures, une partie du produit est conservée en récipient étanche à la température ordinaire, l'autre partie est granulée (ou agglomérée) dans une presse munie d'une filière 4/60. Les granulés sont stockés dans une enceinte étanche. Après une semaine de maturation, on enregistre les résultats suivants qui sont rassemblés dans le Tableau VI.

**TABLEAU VI**

| Azote soluble | en % de la matière sèche | en % de l'azote total |
|---|---|---|
| Colza non traité | 2,70 | 38,7 |
| Colza traité non aggloméré | 0,78 | 11,2 |
| Colza traité aggloméré | 0,68 | 9,7 |

Ce dernier exemple est à comparer à l'Exemple 1 en ce qui concerne le mode d'incorporation des réactifs. La quantité d'eau ajoutée étant plus faible que dans l'Exemple 4 (4,5 % au lieu de 8,9 % par rapport à la masse du tourteau), l'effet attendu de l'augmentation de la température est moins net. L'agglomération exerce un effet légèrement positif.

### EXEMPLE 7

On opère comme dans l'Exemple 6 en ajoutant 325 ml d'eau aux 675 ml de solution acide d'HMT de manière à ce que la quantité totale d'eau ajoutée soit voisine de 6,7 % par rapport à la masse du tourteau. Après une semaine de maturation en récipient étanche, on enregistre les résultats suivants, qui sont rassemblés dans le Tableau VII.

**TABLEAU VII**

| Azote soluble | en % de la matière sèche | en % de l'azote total |
|---|---|---|
| Colza non traité | 2,70 | 38,7 |
| Colza traité non aggloméré | 0,52 | 7,4 |
| Colza traité aggloméré | 0,75 | 10,7 |

Cet exemple montre clairement l'effet bénéfique de l'addition d'eau lors du traitement. Par contre, l'agglomération conduit à une insolubilisation un peu inférieure, qui peut être due au choix de la filière de la presse.

## Revendications

1. Procédé de traitement de matières protéiques comprenant l'étape de réaction d'une telle matière avec de l'héxaméthylènetétramine (HMT),en milieu acide provenant d'un acide inorganique fort, l'HMT étant, dans ladite réaction, transformée in situ en formaldéhyde.

2. Procédé selon la revendication 1, caractérisé en ce que l'HMT est utilisée sous forme de poudre ou de solution aqueuse.

3. Procédé selon l'une des revendications 1 ou 2, caractérisé en ce que les matières protéiques comprennent n'importe quelle protéine pouvant convenir à l'alimentation animale, plus particulièrement des ruminants, en particulier des protéines végétales ou animales, par exemple des tourteaux de soja, de colza, d'arachide, ainsi que la fèverole, la pois et autres matières végétales consommables par l'animal.

4. Procédé selon l'une quelconque des revendications 1 à 3, caractérisé en ce que le pH du produit traité, mesuré conventionnellement sur une suspension aqueuse à 10 % en poids, se situe entre 2 et 6, de préférence environ entre 4,5 et 5,5.

5. Procédé selon l'une quelconque des revendications 1 à 4, caractérisé en ce qu'on établit une mise en contact intime du substrat protéique et des réactifs, par exemple par broyage desdits substrats à une granulométrie de 0,1 à 2 mm, notamment de 0,2 à 0,5 mm environ.

6. Procédé selon l'une quelconque des revendications 1 à 5, caractérisé en ce que le milieu acide provient d'acide chlorhydrique.

7. Procédé selon l'une quelconque des revendications 1 à 6, caractérisé en ce que la quantité d'HMT est déterminée par référence à celle correspondant à la fourniture in situ de la quantité de formaldéhyde nécessaire à la protection des protéines.

8. Procédé selon l'une quelconque des revendications 1 à 7, caractérisé en ce que, par rapport au poids de matière sèche du substrat protéique, la quantité d'HMT également exprimée à sec, est comprise entre 0,2 et 2 % et de préférence entre 0,3 à 1 % en poids, soit entre 0,5 et 4 % de la teneur en protéines brutes.

9. Procédé selon l'une quelconque des revendications 1 à 8, caractérisé en ce que l'HMT est présente sous forme de solution aqueuse contenant simultanément l'acide inorganique fort en vue du traitement du substrat protéique.

10. Procédé selon l'une quelconque des revendications 1 à 9, caractérisé en ce que la réaction est conduite à une température inférieure à la température d'ébullition du milieu réactionnel, avantageusement entre 50 et 70°C.

11. Procédé selon l'une quelconque des revendications 1 à 10, caractérisé en ce que le produit réactionnel est soumis à une maturation, par exemple de 1 à 4 semaines en enceinte étanche permettant la diffusion in situ du formaldéhyde.

## Claims

1. Process for the treatment of proteinaceous matter comprising a stage involving the reaction of such matter with hexamethylenetetramine (HMT) in an acid medium produced by a strong inorganic acid, the HMT being transformed in situ into formaldehyde in the aforesaid reaction.

2. Process according to claim 1, characterized in that the HMT is used in the form of powder or aqueous solution.

3. Process according to one of claims 1 or 2, characterized in that the proteinaceous matter comprises any protein suitable to be used for animal feed, more particularly for ruminants, in particular vegetable or animal protein, for example oilcake from soya, rapeseed, groundnuts, field beans, peas, and other vegetable matter consumable by animals.

4. Process according to any one of claims 1 to 3, characterized in that the pH of the treated product measured conventionally in an aqueous suspension at a concentration of 10% by weight is between 2 and 6, preferably between approximately 4.5 and 5.5.

5. Process according to any one of claims 1 to 4, characterized in that an intimate contact is established between the proteinaceous substrate and the reagents, for example by grinding of the aforesaid substrates to a particle size of 0.1 to 2 mm, in particular to approximately 0.2 to 0.5 mm.

6. Process according to any one of claims 1 to 5, characterized in that the acid medium is produced by hydrochloric acid.

7. Process according to any one of claims 1 to 6, characterized in that the quantity of HMT is determined by reference to the quantity of formaldehyde which must be supplied in situ to protect the proteins.

8. Process according to any one of claims 1 to 7, characterized in that, as a function of the dry matter weight of the proteinaceous substrate, the quantity of HMT, also expressed as dry weight, is between 0.2 and 2%, and preferably between 0.3 and 1% by weight, that is between 0.5 and 4% of the concentration of crude proteins.

9. Process according to any one of claims 1 to 8, characterized in that the HMT is in the form of an aqueous solution simultaneously containing the strong inorganic acid intended for treatment of the proteinaceous substrate.

10. Process according to any one of claims 1 to 9, characterized in that the reaction is carried out at a temperature lower than the boiling point of the reaction medium, advantageously between 50 and 70°C.

11. Process according to any one of claims 1 to 10, characterized in that the reaction product is subjected to maturation, for example for 1 to 4 weeks in a closed container allowing the in situ diffusion of formaldehyde.

## Patentansprüche

1. Verfahren zur Behandlung von Proteinmaterialien, umfassend den Schritt der Reaktion eines solchen Materials mit Hexamethylentetramin (HMT) in saurem Medium, das von einer starken anorganischen Säure stammt, wobei das HMT bei dieser Reaktion in situ in Formaldehyd umgewandelt wird.

2. Verfahren gemäß Anspruch 1, dadurch gekennzeichnet, daß das HMT in Form eines Pulvers oder einer wäßrigen Lösung verwendet wird.

3. Verfahren gemäß einem der Ansprüche 1 oder 2, dadurch gekennzeichnet, daß die Proteinmaterialien irgendein Protein umfassen, das zur Ernährung von Tieren, insbesondere von Wiederkäuern, geeignet ist, insbesondere pflanzliche oder tierische Proteine, zum Beispiel Preßrückstände von Soja, Raps, Erdnuß, sowie Ackerbohne, Erbse und andere pflanzliche Materialien, die von Tieren verzehrt werden können.

4. Verfahren gemäß einem der Ansprüche 1 bis 3, dadurch gekennzeichnet, daß der in herkömmlicher Weise an einer wäßrigen Suspension von 10 Gew.-% gemessene pH-Wert des behandelten Produkts zwischen 2 und 6, vorzugsweise ungefähr zwischen 4,5 und 5,5, liegt.

5. Verfahren gemäß einem der Ansprüche 1 bis 4, dadurch gekennzeichnet, daß das proteinhaltige Substrat und die Reagenzien in innigen Kontakt miteinander gebracht werden, zum Beispiel durch Mahlen der Substrate bis zu einer Korngröße von 0,1 bis 2 mm, insbesondere ungefähr 0,2 bis 0,5 mm.

6. Verfahren gemäß einem der Ansprüche 1 bis 5, dadurch gekennzeichnet, daß das saure Medium von Salzsäure stammt.

7. Verfahren gemäß einem der Ansprüche 1 bis 6, dadurch gekennzeichnet, daß die Menge des HMT in bezug auf die Menge bestimmt wird, die der in situ gelieferten Menge an Formaldehyd entspricht, die zum Schützen der Proteine notwendig ist.

8. Verfahren gemäß einem der Ansprüche 1 bis 7, dadurch gekennzeichnet, daß in bezug auf das Gewicht der Trockenmasse des proteinhaltigen Substrats die ebenfalls als Trockenmasse ausgedrückte Menge des HMT zwischen 0,2 und 2 Gew.-% und vorzugsweise zwischen 0,3 und 1 Gew.-%, d.h. zwischen 0,5 und 4% des Gehalts an Rohproteinen, liegt.

9. Verfahren gemäß einem der Ansprüche 1 bis 8, dadurch gekennzeichnet, daß das HMT in Form einer wäßrigen Lösung vorliegt, die im Hinblick auf die Behandlung des proteinhaltigen Substrats gleichzeitig die starke anorganische Säure enthält.

10. Verfahren gemäß einem der Ansprüche 1 bis 9, dadurch gekennzeichnet, daß die Reaktion bei einer Temperatur unterhalb des Siedepunkts des Reaktionsmediums, vorteilhafterweise zwischen 50 und 70°C, durchgeführt wird.

11. Verfahren gemäß einem der Ansprüche 1 bis 10, dadurch gekennzeichnet, daß das Reaktionsprodukt einer Reifung unter luftdichtem Anschluß unterzogen wird, zum Beispiel 1 bis 4 Wochen, was eine Diffusion des Formaldehyds in situ ermöglicht.
